# EUROPEAN PATENT APPLICATION

(11) **EP 4 343 610 A1**
(43) Date of publication of application: **27.03.2024**
(21) Application number: 23195160.9
(22) Date of filing: 04.09.2023
(51) Int. Cl.: G06F 30/15, G06F 30/20, G06F 113/26, G06F 113/28

(54) **METHOD FOR SELECTING TYPES OF COMPOSITE SANDWICH STRUCTURES FOR FORMING A STRUCTURAL ELEMENT**

(30) Priority: 26.09.2022 US 202217935544
(71) Applicant: The Boeing Company, Arlington, VA 22202 (US)
(72) Inventor: SINGH, Victor, Arlington, 22202 (US)
(74) Representative: Sandri, Sandro

(57) **Abstract**

A method includes calculating a gradient vector of a property of a framework with respect to first components of a first vector and second components of a second vector. The first components correspond to first structures available for a first location of the framework and the second components correspond to second structures available for a second location of the framework. The method includes identifying, based on the gradient vector, first values for the first components and second values for the second components that yield a third value of the property that satisfies a criterion, selecting a first selected composite sandwich structure of the first composite sandwich structures and a second selected composite sandwich structure of the second composite sandwich structures, and providing output indicating (a) the first values and the second values or (b) the first selected composite sandwich structure and the second selected composite sandwich structure.

## Description

### FIELD

The present disclosure generally relates to selecting types of composite sandwich structures for forming a structural element, and more specifically to selecting types of composite sandwich structures for forming a structural element by calculating a gradient vector.

### BACKGROUND

Efficiently forming a structural element such as a fuselage of an aircraft can be a very complex design problem. Some fuselages are built as a combination of numerous composite sandwich structures attached to each other. The composite sandwich structures can vary in overall thickness, number of plies, orientation of plies, and the ply material, for example. Choosing a particular composite sandwich structure for each location of the fuselage generally involves balancing design constraints and design objectives. For example, a lightweight fuselage will generally require less fuel during flight and is therefore desirable, but there are practical limits to how thin a fuselage wall can be and still function safely.

In some examples, a fuselage can be made up of thousands or tens of thousands of analysis locations at which a particular composite sandwich structure must be chosen and used. This is a discrete optimization problem that scales poorly with the number of analysis locations due to the combinatorial nature of the problem. Applying existing optimization techniques to choose composite sandwich structures for such a large structural element is difficult in a practical sense because of the computational complexity. As such, a need exists for a method of selecting composite sandwich structures for a structural element that is more computationally tractable when compared to existing methods.

### SUMMARY

One aspect of the disclosure is a method for selecting composite sandwich structures for forming a structural element, the method comprising: calculating a gradient vector of a property of the structural element with respect to first components of a first vector and second components of a second vector, wherein: the first components correspond to first composite sandwich structures available for use at a first location of the structural element and the first vector represents a first combination of the first composite sandwich structures weighted according to the first components, and the second components correspond to second composite sandwich structures available for use at a second location of the structural element and the second vector represents a second combination of the second composite sandwich structures weighted according to the second components; identifying, based on the gradient vector, first values for the first components and second values for the second components that yield a third value of the property that satisfies a criterion; selecting, based on the first values and the second values, a first selected composite sandwich structure of the first composite sandwich structures and a second selected composite sandwich structure of the second composite sandwich structures; and providing, via a user interface, output indicating (a) the first values and the second values or (b) the first selected composite sandwich structure and the second selected composite sandwich structure.

Another aspect of the disclosure is a non-transitory computer readable medium storing instructions that, when executed by a computing device, cause the computing device to perform functions for selecting types of composite sandwich structures for forming a structural element, the functions comprising: calculating a gradient vector of a property of the structural element with respect to first components of a first vector and second components of a second vector, wherein: the first components correspond to first composite sandwich structures available for use at a first location of the structural element and the first vector represents a first combination of the first composite sandwich structures weighted according to the first components, and the second components correspond to second composite sandwich structures available for use at a second location of the structural element and the second vector represents a second combination of the second composite sandwich structures weighted according to the second components; identifying, based on the gradient vector, first values for the first components and second values for the second components that yield a third value of the property that satisfies a criterion; selecting, based on the first values and the second values, a first selected composite sandwich structure of the first composite sandwich structures and a second selected composite sandwich structure of the second composite sandwich structures; and providing, via a user interface, output indicating (a) the first values and the second values or (b) the first selected composite sandwich structure and the second selected composite sandwich structure.

Another aspect of the disclosure is a computing device comprising: one or more processors; a user interface; and a computer readable medium storing instructions that, when executed by the one or more processors, cause the computing device to perform functions for selecting types of composite sandwich structures for forming a structural element, the functions comprising: calculating a gradient vector of a property of the structural element with respect to first components of a first vector and second components of a second vector, wherein: the first components correspond to first composite sandwich structures available for use at a first location of the structural element and the first vector represents a first combination of the first composite sandwich structures weighted according to the first components, and the second components correspond to second composite sandwich structures available for use at a second location of the structural element and the second vector represents a second combination of the second composite sandwich structures weighted according to the second components; identifying, based on the gradient vector, first values for the first components and second values for the second components that yield a third value of the property that satisfies a criterion; selecting, based on the first values and the second values, a first selected composite sandwich structure of the first composite sandwich structures and a second selected composite sandwich structure of the second composite sandwich structures; and providing, via the user interface, output indicating (a) the first values and the second values or (b) the first selected composite sandwich structure and the second selected composite sandwich structure.

By the term "about" or "substantially" with reference to amounts or measurement values described herein, it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The features, functions, and advantages that have been discussed can be achieved independently in various examples or may be combined in yet other examples further details of which can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and descriptions thereof, will best be understood by reference to the following detailed description of an illustrative example of the present disclosure when read in conjunction with the accompanying Figures.
Figure 1 is a perspective view of an aircraft, according to an example.
Figure 2 is a cross-sectional view of a fuselage, according to an example.
Figure 3 is a block diagram of a computing device, according to an example.
Figure 4 is a cross sectional view of a portion of a structural element, according to an example.
Figure 5 is a block diagram of a method, according to an example.
Figure 6 is block diagrams of methods, according to examples.

### DETAILED DESCRIPTION

As noted above, a need exists for a method of selecting composite sandwich structures for a structural element that is more computationally tractable when compared to existing methods. For example, a design for a structural element such as a fuselage may include hundreds or thousands of locations at which a particular composite sandwich structure must be selected. Those selected composite sandwich structures are stacked and installed at their respective locations and the full structural element is built in this way.

As such, this disclosure includes a method for selecting composite sandwich structures for forming a structural element. Different composite sandwich structures can be defined by a quantity of layers, different materials of each layer, orientations of each layer, overall density, fiber volume fraction, or thickness, for example. The method includes calculating a gradient vector of a property of the structural element with respect to first components of a first vector and second components of a second vector. A gradient vector is a function that assigns a mathematical derivative to points within a multidimensional space. As such, a gradient vector corresponding to a particular point in space indicates the direction and rate of fastest increase of the property at that particular point. In this context, the property of the structural element is typically a physical or computed property, such as a weight, a thickness, an average ply percentage, a structural margin of safety, or a failure index (e.g., a compression rating or a tension rating) of the entire structural element or of a portion of the structural element.

The first components correspond to first composite sandwich structures available for use at a first location of the structural element and the first vector represents a first combination of the first composite sandwich structures weighted according to the first components. The second components correspond to second composite sandwich structures available for use at a second location of the structural element and the second vector represents a second combination of the second composite sandwich structures weighted according to the second components. Some examples include calculating a gradient vector of the property of the structural element with respect to components of hundreds or thousands of vectors corresponding to composite sandwich structures available for use at each of the hundreds or thousands of locations of the structural element.

The method also includes identifying, based on the gradient vector, first values for the first components and second values for the second components that yield a third value of the property that satisfies a criterion. As noted above, some examples include identifying values for components of the hundreds or thousands of vectors corresponding to composite sandwich structures available for use at each of the hundreds or thousands of locations of the structural element.

In an example, a design objective might be to minimize the weight of a portion of the structural element that includes three locations at which composite sandwich structures must be selected. This process might be subject to design constraints such as a minimum tension rating or a minimum compression rating for the portion of the structural element, or a ply drop off rule. A technique such as gradient descent (or ascent) can be used to identify values for components of each vector respectively corresponding to the three locations. In some examples, values for the components of each vector can be chosen to satisfy multiple design objectives and/or design constraints.

The method also includes selecting, based on the first values and the second values, a first selected composite sandwich structure of the first composite sandwich structures and a second selected composite sandwich structure of the second composite sandwich structures. In some examples, a composite sandwich structure is selected for each of the hundreds or thousands of locations that make up the structural element. Selecting the composite sandwich structure for each of the locations of the structural element generally involves selecting a real discrete composite sandwich structure for a particular location based on the identified values of the vectors. The composite sandwich structure for each location is typically chosen as a best match to the linear combination of composite sandwich structures represented by the identified values of the vector corresponding to that particular location.

The method also includes providing, via a user interface, output indicating (a) the first values and the second values or (b) the first selected composite sandwich structure and the second selected composite sandwich structure. For example, the user interface of a computing device can display output that indicates (a) the first values and the second values or (b) the first selected composite sandwich structure and the second selected composite sandwich structure. Generally, the user interface can display any outputs generated during the course of performing the method.

Previous methods of choosing composite sandwich structures for a structural element amounted to a complex and practically intractable combinatorial problem. By evaluating the design variables in a vector space, which enables gradient vectors to be computed, the problem becomes continuous and generally tractable. Thus, the method of the disclosure amounts to an improvement in the technical field of design of structural elements made of composite sandwich structures.

Disclosed examples will now be described more fully hereinafter with reference to the accompanying Drawings, in which some, but not all of the disclosed examples are shown. Indeed, several different examples may be described and should not be construed as limited to the examples set forth herein. Rather, these examples are described so that this disclosure will be thorough and complete and will fully convey the scope of the disclosure to those skilled in the art.

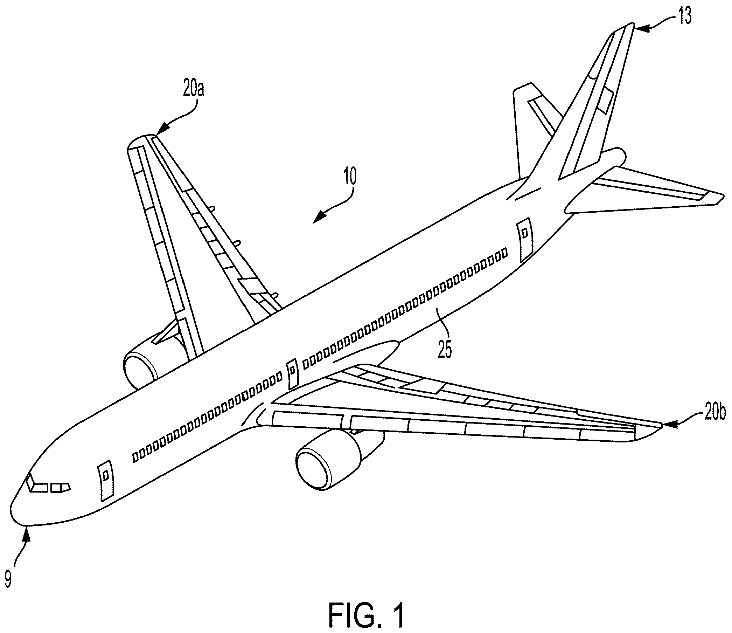

Figure 1 is a perspective view of an aircraft 10 that includes a nose 9, a wing 20a, a wing 20b, a fuselage 25, and a tail 13. The aircraft 10 includes many areas arranged for storage of items during flight. In one example, the fuselage 25 includes storage underneath a passenger compartment for storing luggage and other items or supplies.

The aircraft 10 is shown as a commercial airliner, but other examples are possible.

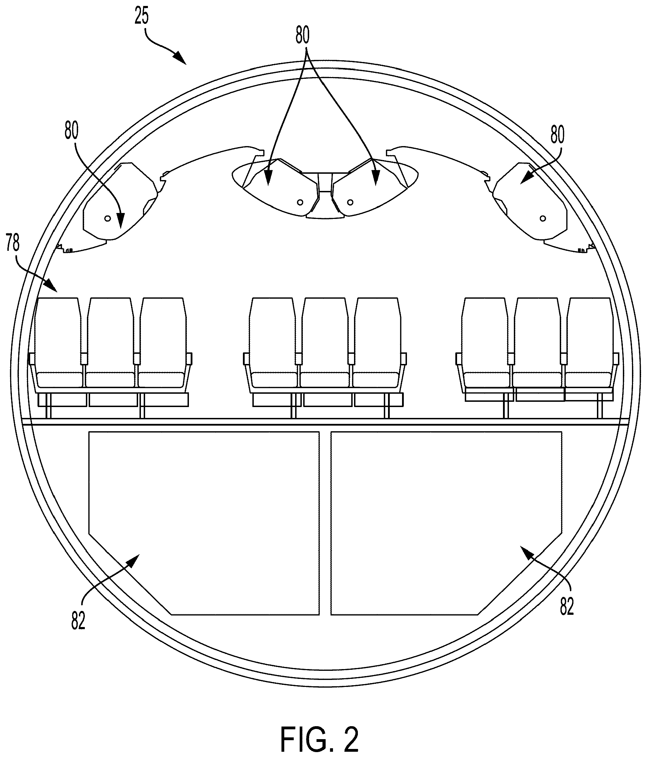

Figure 2 is a cross-sectional view of the fuselage 25 looking aft. As mentioned above, the fuselage 25 has a passenger compartment including seating 78 for passengers. In the passenger compartment, a baggage container takes the form of an overhead bin 80 in the aircraft 10. Typically, many overhead bins 80 are included, such as one per row or one per multiple rows of the seating 78. In addition, multiple overhead bins are typically included on each side of an aisle between the seating 78, as shown in Figure 2. Figure 2 also illustrates additional storage compartments 82 underneath the passenger compartment.

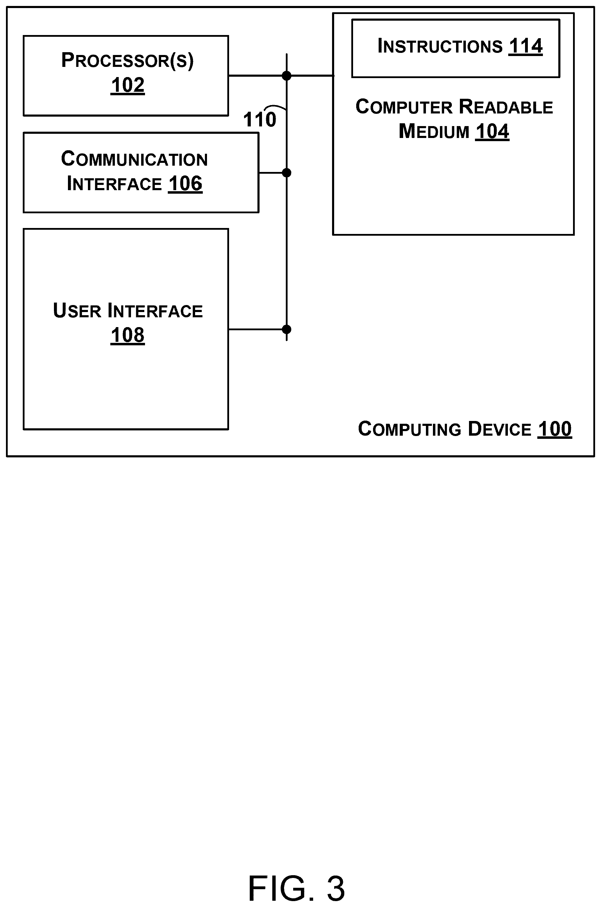

Figure 3 is a block diagram of a computing device 100. The computing device 100 includes one or more processors 102, a non-transitory computer readable medium 104, a communication interface 106, and a user interface 108. Components of the computing device 100 are linked together by a system bus, network, or other connection mechanism 110.

The one or more processors 102 can be any type of processor(s), such as a microprocessor, a digital signal processor, a multicore processor, etc., coupled to the non-transitory computer readable medium 104.

The non-transitory computer readable medium 104 can be any type of memory, such as volatile memory like random access memory (RAM), dynamic random access memory (DRAM), static random access memory (SRAM), or non-volatile memory like read-only memory (ROM), flash memory, magnetic or optical disks, or compact-disc read-only memory (CD-ROM), among other devices used to store data or programs on a temporary or permanent basis.

Additionally, the non-transitory computer readable medium 104 stores instructions 114. The instructions 114 are executable by the one or more processors 102 to cause the computing device 100 to perform any of the functions or methods described herein.

The communication interface 106 can include hardware to enable communication within the computing device 100 and/or between the computing device 100 and one or more other devices. The hardware can include transmitters, receivers, and antennas, for example. The communication interface 106 can be configured to facilitate communication with one or more other devices, in accordance with one or more wired or wireless communication protocols. For example, the communication interface 106 can be configured to facilitate wireless data communication for the computing device 100 according to one or more wireless communication standards, such as one or more Institute of Electrical and Electronics Engineers (IEEE) 801.11 standards, ZigBee standards, Bluetooth standards, etc. As another example, the communication interface 106 can be configured to facilitate wired data communication with one or more other devices.

The user interface 108 can include one or more pieces of hardware used to provide data and control signals to the computing device 100. For instance, the user interface 108 can include a mouse or a pointing device, a keyboard or a keypad, a microphone, a touchpad, or a touchscreen, among other possible types of user input devices. Generally, the user interface 108 can enable an operator to interact with a graphical user interface (GUI) provided by the computing device 100 (e.g., displayed by a display of the user interface 108).

The user interface 108 can include a display and/or loudspeakers that provide audio or visual output. The display can be any type of display component configured to display data. As one example, the display can include a touchscreen display. As another example, the display can include a flat-panel display, such as a liquid-crystal display (LCD) or a light-emitting diode (LED) display. Additionally or alternatively, the display includes a virtual reality display, an extended reality display, and/or an augmented reality display.

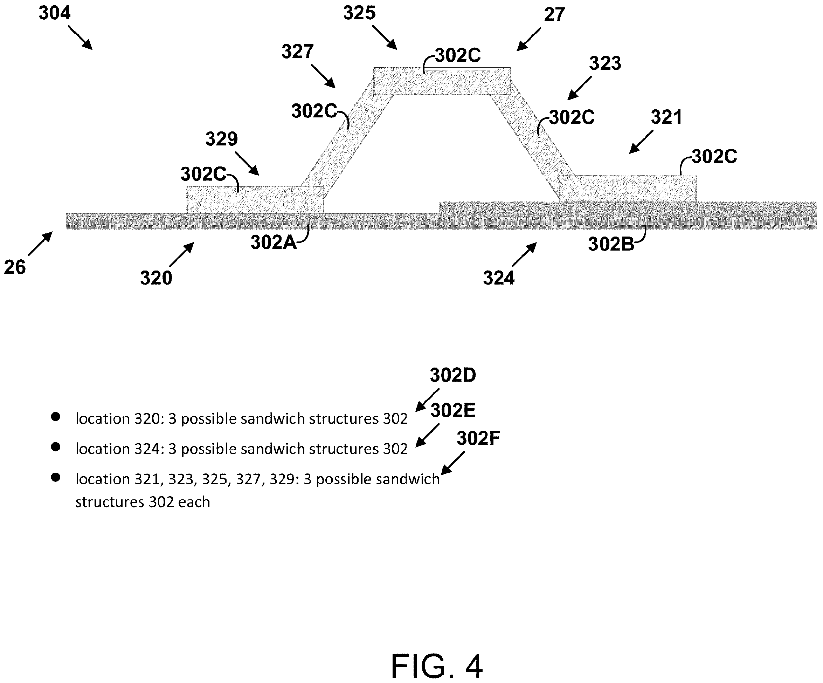

Figure 4 is a cross sectional view of a portion of a structural element 304. In Figure 4, the structural element 304 is the fuselage 25 discussed above, but other examples are possible. As such, the structural element 304 includes a skin 26 (e.g., an outer wall or pad) made up of a composite sandwich structure 302A at a location 320 and a composite sandwich structure 302B at a location 324. The structural element 304 also includes a stringer 27 made up of five instances of a composite sandwich structure 302C at a location 321, a location 323, a location 325, a location 327, and a location 329, respectively. In Figure 4, the composite sandwich structures 302C are the same for ease of explanation, but in other examples the composite sandwich structures of the stringer 27 could be selected to be different from each other in various ways.

The composite sandwich structures 302 generally take the form of multi-layer sandwich structures made of various composite materials including fibers and resin. The composite sandwich structures 302 are defined by a number of layers, an orientation of each layer, and a composition of each layer.

The computing device 100 calculates a gradient vector of a property *p* of the structural element 304 with respect to first components of a first vector and second components of a second vector. More specifically, the computing device 100 calculates a gradient vector ∇*p*(*x*₁,*x*₂*,x*₃*,y*₁*,y*₂*,y*₃*,z*₁*,z*₂,*z*₃). In an example, the property *p* of the structural element 304 is a weight of the portion the structural element 304, that is the weight of the skin 26 and the stringer 27, but in other examples the property could be a weight of a much larger structure or another physical property of the structural element 304.

For example, the property could be a tension rating *(e.g.,* a maximum tension that the structural element 304 is rated to support without failure), a compression rating *(e.g.,* a maximum compression that the structural element 304 is rated to support without failure), an average density, an average of a particular ply percentage (e.g., an average percentage of layers of composite sandwich structures of the structural element 304 having a particular angular orientation), an average of a component of an ABD matrix of the structural element 304, an average of a Young's modulus of the structural element 304, an average of a rigidity modulus of the structural element 304, or an average of a bulk modulus of the structural element 304. Thus, the computing device 100 can calculate the gradient vector ∇*p*(*x*₁, *x*₂*,x*₃*,y₁,y*₂*,y*₃*,z*₁,*z*₂,*z*₃) for any of the aforementioned properties.

Thus, the computing device 100 calculates the gradient vector of the property *p* of the structural element 304 with respect to the components *x*₁*,x*₂*,x*₃ of a vector *̅x̅*̅, the components *y₁,y*₂*,y*₃ of a vector *̅y̅*̅, and the components *z*₁*,z*₂,*z*₃ of a vector *̅z̅*̅.

The first components correspond to first composite sandwich structures available for use at a first location of the structural element and the first vector represents a first combination of the first composite sandwich structures weighted according to the first components. The second components correspond to second composite sandwich structures available for use at a second location of the structural element and the second vector represents a second combination of the second composite sandwich structures weighted according to the second components.

More specifically, the components *x*₁*,x*₂*,x*₃ correspond respectively to composite sandwich structures 302D available for use at the location 320 and the vector *̅x̅*̅ represents a (*e.g*., theoretical) combination of the composite sandwich structures 302D weighted according to (*e.g.,* values of) the components *x*₁*,x*₂*,x*₃*.* Typically, *x*₁ + *x*₂ + *x*₃ = 1. The composite sandwich structures 302D selected for possible use at the location 320 are also treated as a constraint of the design problem.

The composite sandwich structures 302D generally differ from each other with respect to one or more of a material stacking sequence (*e.g*., composition of each layer), a quantity of plies/layers, or an orientation stacking sequence (*e.g*., an orientation of each ply/layer).

The components *y*₁,*y*₂,*y*₃ correspond respectively to composite sandwich structures 302E available for use at the location 324 and the vector *̅y̅*̅ represents a (*e.g*., theoretical) combination of the composite sandwich structures 302E weighted according to (*e.g*., values of) the components *y₁,y*₂*,y*₃. Typically, *y*₁ + *y*₂ + *y*₃ = 1. The composite sandwich structures 302E selected for possible use at the location 324 are also treated as a constraint of the design problem.

The composite sandwich structures 302E generally differ from each other with respect to one or more of a material stacking sequence (*e.g*., composition of each layer), a quantity of plies/layers, or an orientation stacking sequence (*e.g*., an orientation of each ply/layer).

The components *z*₁,*z*₂,*z*₃ correspond respectively to composite sandwich structures 302F available for use at the location 321, the location 323, the location 325, the location 327, and the location 329, and the vector *̅z̅*̅ represents a (*e.g.,* theoretical) combination of the composite sandwich structures 302F weighted according to (*e.g.,* values of) the components *z*₁*,z*₂,*z*₃. Typically, *z*₁ + *z*₂ + *z*₃ = 1. The composite sandwich structures 302F selected for possible use at the location 321, the location 323, the location 325, the location 327, and the location 329 are also treated as a constraint of the design problem.

The composite sandwich structures 302F generally differ from each other with respect to one or more of a material stacking sequence (*e.g*., composition of each layer), a quantity of plies/layers, or an orientation stacking sequence (*e.g*., an orientation of each ply/layer).

In some examples, the composite sandwich structures 302D, the composite sandwich structures 302E, and the composite sandwich structures 302F include the same composite sandwich structures, however in many examples the composite sandwich structures included in each group are different.

The computing device 100 can calculate the gradient vector ∇*p*(*x*₁*,x*₂*,x*₃*,y₁,y*₂*,y*₃*,z*₁*,z*₂,*z*₃) using techniques such as finite differencing or surrogate-based optimization/adaptive response surface methods. Generally, properties of each composite sandwich structure 302 corresponding respectively to the components *x*₁*,x*₂*,x*₃*,y*₁*,y*₂*,y*₃*,z*₁,*z*₂,*z*₃ has its own defined physical properties that have defined relationships with the property *p* for which the gradient vector ∇*p*(*x*₁*,x*₂*,x*₃*,y₁,y*₂*,y*₃*,z*₁,*z*₂,*z*₃) is being calculated. Thus, these properties of the composite sandwich structures 302 are used to define the function *p* and then calculate the gradient vector ∇*p*(*x*₁,*x*₂*,x*₃*,y₁,y*₂*,y*₃*,z*₁,*z*₂,*z*₃) throughout the variable space *x*₁*,x*₂*,x*₃,*y₁,y*₂*,y*₃*,z*₁*,z*₂,*z*₃.

Once the gradient vector ∇*p*(*x*₁, *x*₂*,x*₃*,y₁,y*₂*,y*₃*,z*₁,*z*₂,*z*₃) has been calculated, the computing device 100 identifies, based on the gradient vector ∇*p*(*x*₁*,x*₂*,x*₃*,y₁,y*₂*,y*₃*,z*₁,*z*₂,*z*₃), values for the components *x*₁*,x*₂*,x*₃*,* values for the components *y₁,y*₂*,y*₃*,* and values for the components *z*₁*,z*₂,*z*₃ that yield a value of the property *p* of the structural element 304 that satisfies a criterion (*e.g*., a design objective or a design constraint). In many examples, this involves identifying values for the components that yield a minimum or maximum value of a design objective or a design constraint. Thus, the computing device 100 typically uses gradient ascent or gradient descent techniques to identify the values for *x*₁*,x*₂*,x*₃*,y₁,y*₂*,y*₃*,z*₁,*z*₂,*z*₃ that yield a value of the property *p* that satisfies the criterion.

In a specific example, the computing device 100 determines that the following values for *x*₁*,x*₂*,x*₃*,y*₁*,y*₂*,y*₃*,z*₁*,z*₂,*z*₃ yield a value *p*₀ for the property *p* that is a maximized value of a tension rating of the structural component 304: *x*₁ = 0.2, *x*₂ = 0.3, *x₃* = 0.5, *y*₁ = 0.6, *y*₂ = 0.1, *y*₃ = 0.3, *z*₁ = 0.35, *z*₂ = 0.15, *z*₃ = 0.5. In another example, the aforementioned values yield a minimum value of a rigidity modulus of the structural element 304. Other examples are possible.

In some examples, the computing device 100 calculates another gradient vector ∇*q*(*x*₁*,x*₂,*x*₃,*y*₁,*y*₂,*y*₃,*z*₁,*z*₂,*z*₃), of another property *q* of the structural element 304 with respect to the components *x*₁*,x*₂,*x*₃,*y*₁,*y*₂,*y*₃,*z*₁,*z*₂,*z*₃. For instance, the property *p* could be a weight of the structural element 304 and computing device 100 can identify values of *x*₁*,x*₂,*x*₃,*y*₁,*y*₂,*y*₃,*z*₁,*z*₂,*z*₃ that minimize that weight. The property *q* could be a tension rating of the structural element 304. Thus, the computing device 100 can calculate the gradient vector ∇*q*(*x*₁*,x*₂,*x*₃,*y*₁,*y*₂,*y*₃,*z*₁,*z*₂,*z*₃) and use gradient ascent/descent techniques to identify values of *x*₁*,x*₂,*x*₃,*y*₁,*y*₂,*y*₃,*z*₁,*z*₂,*z*₃) that yield a value of *q* that is greater than a minimum allowable tension rating of the structural element 304. In another example, the computing device 100 can calculate the gradient vector ∇*q*(*x*₁*,x*₂,*x*₃,*y*₁,*y*₂,*y*₃,*z*₁,*z*₂,*z*₃) and use gradient ascent/descent techniques to identify values of *x*₁*,x*₂,*x*₃,*y*₁,*y*₂,*y*₃,*z*₁,*z*₂,*z*₃ that yield a value of *q* that is less than a maximum allowable weight of the structural element 304. In this way, the computing device 100 may identify a range of values for *x*₁*,x*₂,*x*₃,*y*₁,*y*₂,*y*₃,*z*₁,*z*₂,*z*₃ that satisfy the criteria for *p* and for *q*.

Next, the computing device 100 selects, based on the first values and the second values, a first selected composite sandwich structure of the first composite sandwich structures and a second selected composite sandwich structure of the second composite sandwich structures.

That is, the computing device 100 selects the composite sandwich structure 302A from among the composite sandwich structures 302D, selects the composite sandwich structure 302B from among the composite sandwich structures 302E, and selects the composite sandwich structure 302C from among the composite sandwich structures 302F. In particular, the computing device 100 selects the form of the composite sandwich structures, defined by overall thickness, number of plies, angular orientation of plies, and the ply material of each layer (*e.g*., slit tape, non-slit tape, PW fabric, or PX fabric), among other characteristics. In other examples, the computing device 100 is used to select hundreds or thousands of composite sandwich structures at hundreds or thousands of locations of the structural element 304, (*e.g*., locations defining an entire fuselage).

Typically, the computing device 100 selects the composite sandwich structure 302A based on the computing device 100 identifying the values for *x*₁*,x*₂*,x*₃ that yielded values for *p* and/or *q* that satisfied the applicable criteria for each property noted above. For example, if *x*₁ = 0.2, *x*₂ = 0.3, *x*₃ = 0.5, the computing device 100 typically would select the composite sandwich structure 302A corresponding to *x*₃ because *x*₃ > *x*₂ > *x*₁. That is, the hypothetical composite sandwich structure represented by the vector *̅x̅*̅ most closely resembles the composite sandwich structure 302A that corresponds to the component *x*₃*,* therefore the computing device 100 selects the composite sandwich structure 302A for the location 320.

In some examples, the identified values *x*₁,*x*₂,*x*₃ might be substantially equal in value (*e.g*., within +/- 5%) and the computing device 100 could select the composite sandwich structure 302 for the location 320 that corresponds to the value that best satisfies the design constraints after rounding. Other examples are possible.

In a similar manner, the computing device 100 selects the composite sandwich structure 302B based on the computing device 100 identifying the values for *y₁,y*₂*,y*₃ that yielded values for *p* and/or *q* that satisfied the applicable criteria for each property noted above. For example, if *y*₁ = 0.6, *y*₂ = 0.1, *y*₃ = 0.3, the computing device 100 typically would select the composite sandwich structure 302B corresponding to *y*₁ because *y*₁ > *y*₃ > *y*₂. That is, the hypothetical composite sandwich structure represented by the vector *̅y̅*̅ most closely resembles the composite sandwich structure 302B that corresponds to the component *y*₁*,* therefore the computing device 100 selects the composite sandwich structure 302B for the location 324.

In some examples, the identified values *y*₁*,y*₂,*y*₃ might be substantially equal in value (*e.g*., within +/- 5%) and the computing device 100 could select the composite sandwich structure 302 for the location 324 that corresponds to the value that best satisfies the design constraints after rounding. Other examples are possible.

Likewise, the computing device 100 selects the composite sandwich structure 302C based on the computing device 100 identifying the values for *z*₁*,z*₂,*z*₃ that yielded values for *p* and/or *q* that satisfied the applicable criteria for each property noted above. For example, if *z*₁ = 0.35, *z*₂ = 0.15, *z*₃ = 0.5, the computing device 100 typically would select the composite sandwich structure 302C corresponding to *z*₃ because *z*₃ > *z*₁ > *z*₂. That is, the hypothetical composite sandwich structure represented by the vector *̅z̅*̅ most closely resembles the composite sandwich structure 302C that corresponds to the component *z*₃, therefore the computing device 100 selects the composite sandwich structure 302C for the location 321, the location 323, the location 325, the location 327, and the location 329.

In some examples, the identified values *z*₁*,z*₂,*z*₃ might be substantially equal in value (*e.g.*, within +/- 5%) and the computing device 100 could select the composite sandwich structure 302 for the location 321, the location 323, the location 325, the location 327, and the location 329 that corresponds to the value that best satisfies the design constraints after rounding. Other examples are possible.

Additionally, the computing device 100 provides, via the user interface 108, output indicating (a) the first values and the second values or (b) the first selected composite sandwich structure and the second selected composite sandwich structure. That is, the user interface 108 provides visual or audio output indicating the values *x*₁*,x*₂*_{,}x*₃*,y*₁*,y*₂*_{,}y*₃*,z*₁*,z*₂*,z*₃ that yield the values of *p* and *q* that satisfy the criteria (*e.g.,* design objectives and/or constraints) discussed above. Additionally or alternatively, the user interface 108 provides visual or audio output indicating the composite sandwich structure 302A, the composite sandwich structure 302B, and/or the composite sandwich structure 302C (*e.g*., physical characteristics of the composite sandwich structure 302A, physical characteristics of the composite sandwich structure 302B, and/or physical characteristics of the composite sandwich structure 302C).

In some examples, a technician uses the information indicated by the user interface 108 to form the structural element 304 by installing the composite sandwich structure 302A at the location 320, the composite sandwich structure 302B at the location 324, the composite sandwich structure 302C at the location 321, the composite sandwich structure 302C at the location 323, the composite sandwich structure 302C at the location 325, the composite sandwich structure 302C at the location 327, and/or the composite sandwich structure 302C the location 329.

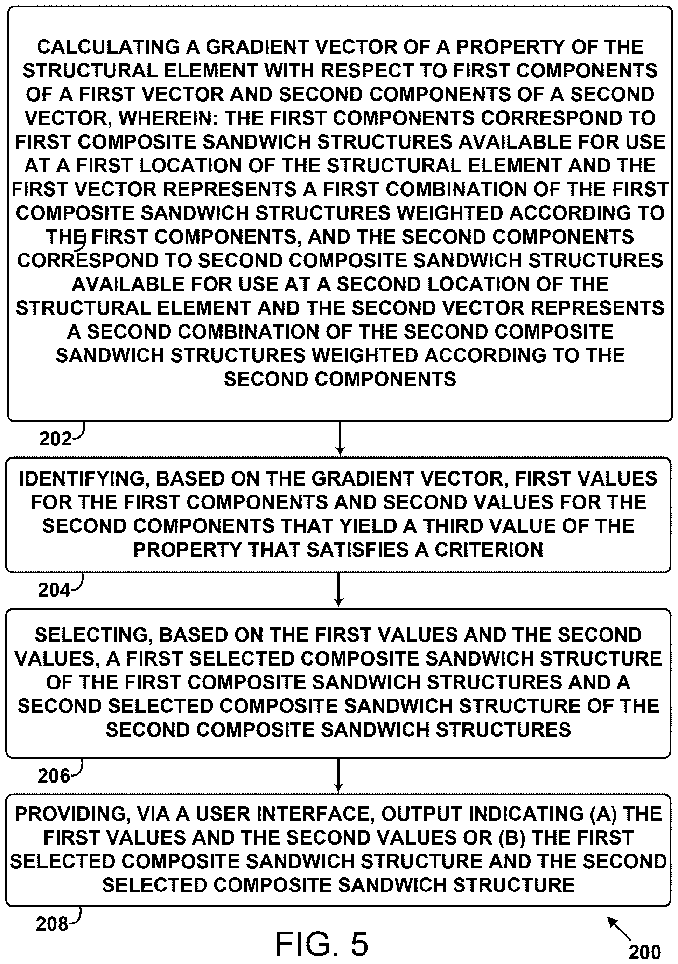

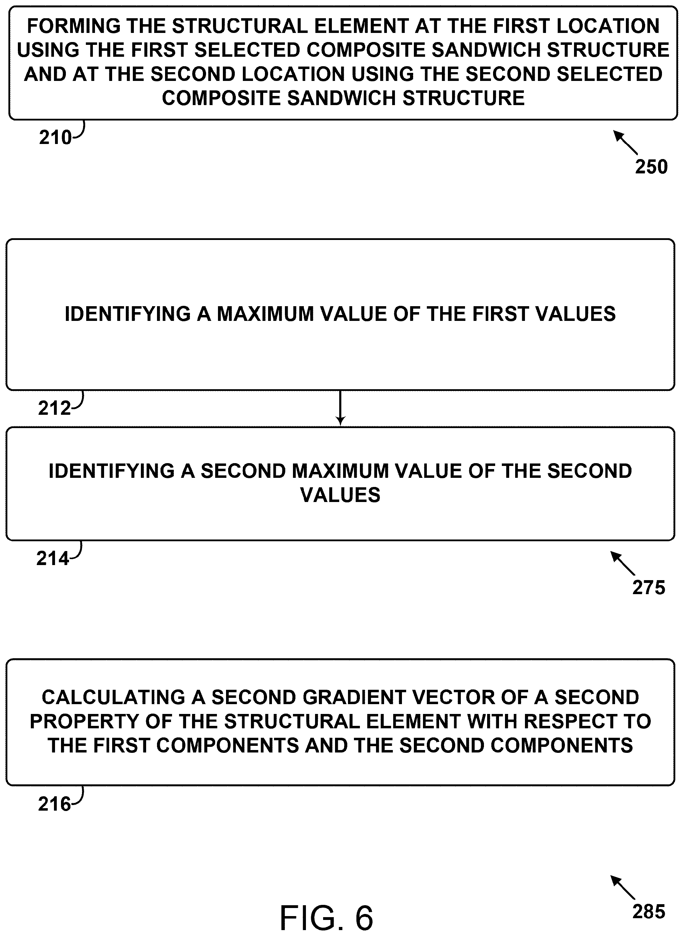

Figure 5 and Figure 6 are block diagrams of a method 200, a method 250, a method 275, and a method 285 for selecting composite sandwich structures 302 for forming the structural element 304. As shown in Figure 5 and Figure 6, the method 200, the method 250, the method 275, and the method 285 include one or more operations, functions, or actions as illustrated by blocks 202, 204, 206, 208, 210, 212, 214, and 216. Although the blocks are illustrated in a sequential order, these blocks may also be performed in parallel, and/or in a different order than those described herein. Also, the various blocks may be combined into fewer blocks, divided into additional blocks, and/or removed based upon the desired implementation.

At block 202, the method 200 includes calculating a gradient vector ∇*p*(*x*₁,*x*₂,*x*₃,*y*₁,*y*₂,*y*₃,*z*₁,*z*₂,*z*₃) of a property *p* of the structural element 304 with respect to first components *x*₁*,x*₂*,x₃* of a first vector *̅x̅*̅ and second components *y*₁*,y*₂*,y*₃ of a second vector *̅y̅*̅. The first components *x*₁*,x*₂*,x*₃ correspond to the first composite sandwich structures 302D available for use at the first location 320 of the structural element 304 and the first vector *̅x̅*̅ represents a first combination of the first composite sandwich structures 302D weighted according to the first components *x*₁*,x*₂*,x*₃*.* The second components *y*₁*,y*₂,*y*₃ correspond to second composite sandwich structures 302E available for use at the second location 324 of the structural element 304 and the second vector *̅y̅*̅ represents a second combination of the second composite sandwich structures 302E weighted according to the second components *y*₁*,y*₂*,y*₃*.* Functionality related to block 202 is described above with reference to Figure 4.

At block 204, the method 200 includes identifying, based on the gradient vector ∇*p*(*x*₁,*x*₂,*x*₃,*y*₁,*y*₂,*y*₃,*z*₁,*z*₂,*z*₃), first values for the first components *x*₁*,x*₂*,x*₃ and second values for the second components *y*₁*,y*₂*,y*₃ that yield a third value *p*₀ of the property *p* that satisfies a criterion. Functionality related to block 204 is described above with reference to Figure 4.

At block 206, the method 200 includes selecting, based on the first values and the second values, a first selected composite sandwich structure 302A of the first composite sandwich structures 302D and a second selected composite sandwich structure 302B of the second composite sandwich structures 302E. Functionality related to block 206 is described above with reference to Figure 4.

At block 208, the method 200 includes providing, via the user interface 108, output indicating (a) the first values and the second values or (b) the first selected composite sandwich structure 302A and the second selected composite sandwich structure 302B. Functionality related to block 208 is described above with reference to Figure 4.

At block 210, the method 250 includes forming the structural element 304 at the first location 320 using the first selected composite sandwich structure 302A and at the second location 324 using the second selected composite sandwich structure 302B. Functionality related to block 210 is described above with reference to Figure 4.

At block 212, the method 275 includes identifying a maximum value of the first values for the first components *x*₁*,x*₂*,x*₃. In this context, selecting the first selected composite sandwich structure 302A includes selecting the first selected composite sandwich structure 302A that corresponds to the maximum value of the first values for the first components *x*₁*,x*₂*,x*₃*.* Functionality related to block 212 is described above with reference to Figure 4.

At block 214, the method 275 includes identifying a second maximum value of the second values for the second components *y*₁*,y*₂*,y*₃*.* In this context, selecting the second selected composite sandwich structure 302B includes selecting the second selected composite sandwich structure 302B that corresponds to the second maximum value of the second values for the second components *y*₁*,y*₂*,y*₃*.* Functionality related to block 214 is described above with reference to Figure 4.

At block 216, the method 285 includes calculating a second gradient vector ∇*q*(*x*₁,*x*₂,*x*₃,*y*₁,*y*₂,*y*₃,*z*₁,*z*₂,*z*₃) of a second property *q* of the structural element 304 with respect to the first components *x*₁*,x*₂*,x*₃ and the second components *y*₁*,y*₂*,y*₃*.* In this context, identifying the first values for the first components *x*₁*,x*₂*,x*₃ and the second values for the second components *y*₁*,y*₂*,y*₃ includes identifying the first values and the second values that also satisfy a second criterion. Functionality related to block 216 is described above with reference to Figure 4.

Further, the disclosure comprises embodiments according to the following clauses:
Clause 1. A method (200) for selecting composite sandwich structures (302) for forming a structural element (304), the method comprising:
   (202) calculating a gradient vector of a property (p) of the structural element with respect to first components (*x*₁,*x*₂*,x*₃) of a first vector (*̅x̅*̅) and second components (y₁*,y*₂,*y*₃) of a second vector (*̅y̅*̅), wherein:
      the first components correspond to first composite sandwich structures (302D) available for use at a first location (320) of the structural element and the first vector represents a first combination of the first composite sandwich structures weighted according to the first components, and
      the second components correspond to second composite sandwich structures (302E) available for use at a second location (324) of the structural element and the second vector represents a second combination of the second composite sandwich structures weighted according to the second components;
   (204) identifying, based on the gradient vector, first values for the first components and second values for the second components that yield a third value (*p*₀) of the property that satisfies a criterion;
   (206) selecting, based on the first values and the second values, a first selected composite sandwich structure (302A) of the first composite sandwich structures and a second selected composite sandwich structure (302B) of the second composite sandwich structures; and
   (208) providing, via a user interface, output indicating (a) the first values and the second values or (b) the first selected composite sandwich structure and the second selected composite sandwich structure.
Clause 2. The method of Clause 1, further comprising (210) forming the structural element at the first location using the first selected composite sandwich structure and at the second location using the second selected composite sandwich structure.
Clause 3. The method of either Clause 1 or 2, wherein the first location and the second location both correspond to a skin (26) of an aircraft.
Clause 4. The method of any one of Clauses 1 to 3, wherein the first composite sandwich structures are the same as the second composite sandwich structures.
Clause 5. The method of any one of Clauses 1 to 4, wherein the first location corresponds to a skin (26) of an aircraft and the second location corresponds to a stringer (27) of the aircraft.
Clause 6. The method of any one of Clauses 1 to 5, wherein the first composite sandwich structures differ from each other with respect to one or more of a material stacking sequence, a quantity of plies, or an orientation stacking sequence.
Clause 7. The method of any one of Clause 1 to 6, wherein the second composite sandwich structures differ from each other with respect to one or more of a material stacking sequence, a quantity of plies, or an orientation stacking sequence.
Clause 8. The method of any one of Clauses 1 to 7, wherein calculating the gradient vector comprises calculating the gradient vector of a tension rating of the structural element.
Clause 9. The method of any one of Clauses 1 to 8, wherein calculating the gradient vector comprises calculating the gradient vector of a compression rating of the structural element.
Clause 10. The method of any one of Clauses 1 to 9, wherein calculating the gradient vector comprises calculating a gradient vector of one or more of (1) an average of a component of an ABD matrix of the structural element, (2) an average of a Young's modulus of the structural element, (3) an average of a rigidity modulus of the structural element, or (4) an average of a bulk modulus of the structural element.
Clause 11. The method of any one of Clauses 1 to 10, wherein calculating the gradient vector comprises calculating the gradient vector of an average density of the structural element.
Clause 12. The method of any one of Clauses 1 to 11, wherein calculating the gradient vector comprises calculating the gradient vector of an average of a particular ply percentage.
Clause 13. The method of any one of Clauses 1 to 12, wherein identifying the first values and the second values comprises identifying the first values and the second values that yield a minimum value of the property.
Clause 14. The method of any one of Clauses 1 to 13, wherein identifying the first values and the second values comprises identifying the first values and the second values that yield a maximum value of the property.
Clause 15. The method of any one of Clauses 1 to 14, further comprising:
   (212) identifying a maximum value of the first values,
   wherein selecting the first selected composite sandwich structure comprises selecting the first selected composite sandwich structure that corresponds to the maximum value of the first values.
Clause 16. The method of any one of Clauses 1 to 15, further comprising:
   (214) identifying a second maximum value of the second values,
   wherein selecting the second selected composite sandwich structure comprises selecting the second selected composite sandwich structure that corresponds to the second maximum value of the second values.
Clause 17. The method of any one of Clauses 1 to 16, wherein the criterion is a first criterion, the method further comprising:
   (216) calculating a second gradient vector of a second property (q) of the structural element with respect to the first components and the second components,
   wherein identifying the first values and the second values comprises identifying the first values and the second values that also satisfy a second criterion.
Clause 18. The method of any one of Clauses 1 to 17, wherein selecting the first selected composite sandwich structure and the second selected composite sandwich structure comprises selecting the first selected composite sandwich structure and the second selected composite sandwich structure such that the first selected composite sandwich structure and the second selected composite sandwich structure satisfy the first criterion and the second criterion.
Clause 19. A non-transitory computer readable medium (104) storing instructions that, when executed by a computing device (100), cause the computing device to perform functions for selecting types of composite sandwich structures (302) for forming a structural element (304), the functions comprising:
   (202) calculating a gradient vector of a property (p) of the structural element with respect to first components (*x₁, x*₂*,x*₃) of a first vector (*̅x̅*̅) and second components (y₁*,y*₂,*y*₃4) of a second vector (*y*), wherein:
      the first components correspond to first composite sandwich structures (302D) available for use at a first location (320) of the structural element and the first vector represents a first combination of the first composite sandwich structures weighted according to the first components, and
      the second components correspond to second composite sandwich structures (302E) available for use at a second location (324) of the structural element and the second vector represents a second combination of the second composite sandwich structures weighted according to the second components;
   (204) identifying, based on the gradient vector, first values for the first components and second values for the second components that yield a third value of the property that satisfies a criterion;
   (206) selecting, based on the first values and the second values, a first selected composite sandwich structure (302A) of the first composite sandwich structures and a second selected composite sandwich structure (302B) of the second composite sandwich structures; and
   (208) providing, via a user interface, output indicating (a) the first values and the second values or (b) the first selected composite sandwich structure and the second selected composite sandwich structure.
Clause 20. The computing device (100) of Clause 19 comprising:
   one or more processors (102);
   a user interface (108); and
   the computer readable medium (104) storing instructions (114) that, when executed by the one or more processors, cause the computing device to perform functions for selecting the types of composite sandwich structures (302) for forming the structural element (304), the functions comprising:
      (202) calculating the gradient vector of a property (p) of the structural element with respect to first components (*x₁, x*₂*,x*₃) of a first vector (*̅x̅*̅) and second components (y₁*,y*₂,*y*₃) of a second vector (*̅y̅*̅), wherein:
         the first components correspond to first composite sandwich structures (302D) available for use at a first location (320) of the structural element and the first vector represents a first combination of the first composite sandwich structures weighted according to the first components, and
         the second components correspond to second composite sandwich structures (302E) available for use at a second location (324) of the structural element and the second vector represents a second combination of the second composite sandwich structures weighted according to the second components;
      (204) identifying, based on the gradient vector, first values for the first components and second values for the second components that yield a third value *p*₀ of the property that satisfies a criterion;
      (206) selecting, based on the first values and the second values, a first selected composite sandwich structure (302A) of the first composite sandwich structures and a second selected composite sandwich structure (302B) of the second composite sandwich structures; and
      (208) providing, via the user interface, output indicating (a) the first values and the second values or (b) the first selected composite sandwich structure and the second selected composite sandwich structure.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples may describe different advantages as compared to other advantageous examples. The example or examples selected are chosen and described in order to explain the principles of the examples, the practical application, and to enable others of ordinary skill in the art to understand the disclosure for various examples with various modifications as are suited to the particular use contemplated.

## Claims

1. A method (200) for selecting composite sandwich structures (302) for forming a structural element (304), the method comprising:
(202) calculating a gradient vector of a property (p) of the structural element with respect to first components (*x₁, x*₂*,x*₃) of a first vector (*̅x̅*̅) and second components (y₁*,y*₂,*y*₃) of a second vector (*̅y̅*̅), wherein:
the first components correspond to first composite sandwich structures (302D) available for use at a first location (320) of the structural element and the first vector represents a first combination of the first composite sandwich structures weighted according to the first components, and
the second components correspond to second composite sandwich structures (302E) available for use at a second location (324) of the structural element and the second vector represents a second combination of the second composite sandwich structures weighted according to the second components;
(204) identifying, based on the gradient vector, first values for the first components and second values for the second components that yield a third value (*p*₀) of the property that satisfies a criterion;
(206) selecting, based on the first values and the second values, a first selected composite sandwich structure (302A) of the first composite sandwich structures and a second selected composite sandwich structure (302B) of the second composite sandwich structures; and
(208) providing, via a user interface, output indicating (a) the first values and the second values or (b) the first selected composite sandwich structure and the second selected composite sandwich structure.

2. The method of claim 1, further comprising (210) forming the structural element at the first location using the first selected composite sandwich structure and at the second location using the second selected composite sandwich structure.

3. The method of either claim 1 or 2, wherein the first location and the second location both correspond to a skin (26) of an aircraft.

4. The method of any one of claims 1 to 3, wherein the first composite sandwich structures are the same as the second composite sandwich structures.

5. The method of any one of claims 1 to 4, wherein the first location corresponds to a skin (26) of an aircraft and the second location corresponds to a stringer (27) of the aircraft.

6. The method of any one of claims 1 to 5, wherein the first composite sandwich structures differ from each other with respect to one or more of a material stacking sequence, a quantity of plies, or an orientation stacking sequence.

7. The method of any one of claims 1 to 6, wherein the second composite sandwich structures differ from each other with respect to one or more of a material stacking sequence, a quantity of plies, or an orientation stacking sequence.

8. The method of any one of claims 1 to 7, wherein calculating the gradient vector comprises calculating the gradient vector of a tension rating of the structural element.

9. The method of any one of claims 1 to 8, wherein calculating the gradient vector comprises calculating the gradient vector of a compression rating of the structural element.

10. The method of any one of claims 1 to 9, wherein calculating the gradient vector comprises calculating a gradient vector of one or more of (1) an average of a component of an ABD matrix of the structural element, (2) an average of a Young's modulus of the structural element, (3) an average of a rigidity modulus of the structural element, or (4) an average of a bulk modulus of the structural element.

11. The method of any one of claims 1 to 10, wherein calculating the gradient vector comprises calculating the gradient vector of an average density of the structural element.

12. The method of any one of claims 1 to 11, wherein calculating the gradient vector comprises calculating the gradient vector of an average of a particular ply percentage.

13. The method of any one of claims 1 to 12, wherein identifying the first values and the second values comprises identifying the first values and the second values that yield a minimum value of the property.

14. A non-transitory computer readable medium (104) storing instructions that, when executed by a computing device (100), cause the computing device to perform functions for selecting types of composite sandwich structures (302) for forming a structural element (304), the functions comprising:
(202) calculating a gradient vector of a property (p) of the structural element with respect to first components (*x₁, x*₂*,x*₃) of a first vector (*̅x̅*̅) and second components (y₁*,y*₂,*y*₃4) of a second vector (*y*), wherein:
the first components correspond to first composite sandwich structures (302D) available for use at a first location (320) of the structural element and the first vector represents a first combination of the first composite sandwich structures weighted according to the first components, and
the second components correspond to second composite sandwich structures (302E) available for use at a second location (324) of the structural element and the second vector represents a second combination of the second composite sandwich structures weighted according to the second components;
(204) identifying, based on the gradient vector, first values for the first components and second values for the second components that yield a third value of the property that satisfies a criterion;
(206) selecting, based on the first values and the second values, a first selected composite sandwich structure (302A) of the first composite sandwich structures and a second selected composite sandwich structure (302B) of the second composite sandwich structures; and
(208) providing, via a user interface, output indicating (a) the first values and the second values or (b) the first selected composite sandwich structure and the second selected composite sandwich structure.

15. The computing device (100) of claim 14 comprising:
one or more processors (102);
a user interface (108); and
the computer readable medium (104) storing instructions (114) that, when executed by the one or more processors, cause the computing device to perform functions for selecting the types of composite sandwich structures (302) for forming the structural element (304), the functions comprising:
(202) calculating the gradient vector of a property (p) of the structural element with respect to first components (*x₁, x*₂*,x*₃) of a first vector (*̅x̅*̅) and second components (y₁*,y*₂,*y*₃) of a second vector (*̅y̅*̅), wherein:
the first components correspond to first composite sandwich structures (302D) available for use at a first location (320) of the structural element and the first vector represents a first combination of the first composite sandwich structures weighted according to the first components, and
the second components correspond to second composite sandwich structures (302E) available for use at a second location (324) of the structural element and the second vector represents a second combination of the second composite sandwich structures weighted according to the second components;
(204) identifying, based on the gradient vector, first values for the first components and second values for the second components that yield a third value *p*₀ of the property that satisfies a criterion;
(206) selecting, based on the first values and the second values, a first selected composite sandwich structure (302A) of the first composite sandwich structures and a second selected composite sandwich structure (302B) of the second composite sandwich structures; and
(208) providing, via the user interface, output indicating (a) the first values and the second values or (b) the first selected composite sandwich structure and the second selected composite sandwich structure.
